Europäisches Patentamt

European Patent Office

Office européen des brevets

(19)

(11) Numéro de publication : **0 287 461 B1**

(12) **FASCICULE DE BREVET EUROPEEN**

(45) Date de publication du fascicule du brevet :
16.10.91 Bulletin 91/42

(21) Numéro de dépôt : **88400889.7**

(22) Date de dépôt : **13.04.88**

(51) Int. Cl.⁵ : **A62B 9/02, G05D 16/06**

(54) **Régulateur à la demande de fourniture de gaz respiratoire.**

(30) Priorité : **15.04.87 FR 8705379**

(43) Date de publication de la demande :
**19.10.88 Bulletin 88/42**

(45) Mention de la délivrance du brevet :
**16.10.91 Bulletin 91/42**

(84) Etats contractants désignés :
**DE GB IT**

(56) Documents cités :
**FR-A- 1 222 151**
**FR-A- 1 335 090**
**FR-A- 2 301 272**
**GB-A- 1 106 766**

(73) Titulaire : **INTERTECHNIQUE**
**61 Rue P. Curie ZI les Gâtines BP No. 1**
**F-78370 Plaisir (FR)**

(72) Inventeur : **Ouillon, René**
**20 Rue F. Léger**
**F-91160 Saulx Les Chartreux (FR)**
Inventeur : **Langlois, Roger**
**43 Bld. de la Reine**
**F-78000 Versailles (FR)**

(74) Mandataire : **Fort, Jacques**
**CABINET PLASSERAUD 84, rue d'Amsterdam**
**F-75009 Paris (FR)**

## Description

L'invention concerne les régulateurs à la demande pour installation respiratoire comportant une entrée d'alimentation en gaz respiratoire et une sortie de liaison avec un masque respiratoire, dont la mise en communication est commandée par des moyens sensibles à la pression qui règne dans une chambre de pilotage reliée à une pression de référence par des moyens d'étranglement et à la sortie de liaison par un clapet de pilotage commandé par la pression qui règne à ladite sortie de liaison. De tels régulateurs à clapets de pilotage sont couramment utilisés. Un exemple en est donné dans le document FR-A-2301272. Ils comprennent un seul clapet de pilotage et un seul clapet piloté.

L'invention trouve une application particulièrement importante, bien que non exclusive, dans les installations respiratoires dont la source d'alimentation en gaz est constituée par un générateur d'air très enrichi en oxygène fonctionnant en circuit ouvert et utilisant l'adsorption sélective de l'oxygène sur un matériau tel qu'un tamis moléculaire, puis la restitution de cet oxygène. On connaît des sources de ce type, fréquemment désignées par l'appellation OBOG ou OBOGS, qui, comparées aux convertisseurs d'oxygène liquide, ont l'avantage de ne pas exiger un réapprovisionnement au sol.

Mais, alors que les convertisseurs d'oxygène liquide et les bouteilles d'oxygène sous pression fournissent de l'oxygène sous une pression élevée et relativement constante (la plage de variation de la pression relative étant dans un rapport de 1 à 2) les générateurs en circuit ouvert fournissent le gaz respiratoire sous une pression faible et très variable. L'air admis à ces générateurs est généralement prélevé sur le compresseur d'un turboréacteur et la pression varie beaucoup avec les configurations de vol. Un générateur qu'on peut considérer comme représentatif fournit le gaz respiratoire sous une pression relative susceptible de varier de 200 mbars jusqu'à 4 bars, c'est-à-dire dans un rapport de 1 à 20. Par ailleurs, à la pression minimale (200 mbar), le débit stabilisé délivré par le régulateur doit être de l'ordre de 100 l/min.

Des régulateurs actuels du type ci-dessus défini, dont les moyens sensibles à la pression sont constitués par une membrane formant clapet principal piloté, permettent de fournir les débits requis sous un faible encombrement lorsque la source est à pression relativement élevée et peu variable. Il n'en est pas de même lorsque la pression d'alimentation est faible et très variable. En effet, la membrane en élastomère, constituant les moyens sensibles à la pression, a des caractéristiques (diamètre extérieur, diamètre d'appui sur le siège de clapet, épaisseur, dureté) choisies pour la pression maximale d'alimentation si on veut éviter des déformations excessives lorsque la pression est maximale. Mais un clapet membrane ainsi dimensionné ne permet pas, sous pression faible, de fournir le débit requis. Si on tente d'adapter le clapet membrane à la pression la plus faible, pour qu'il soit capable de fournir alors le débit nécessaire, il risque de subir des déformations excessives aux pressions élevées et, au surplus, présente des vibrations parasites nuisibles a son efficacité et à sa fiabilité.

La présente invention vise à fournir un régulateur à la demande, à clapet de pilotage de façon à pouvoir être miniaturisé, répondant mieux que ceux antérieurement connus aux exigences de l'alimentation sous pression faible et très variable. Pour cela elle propose un régulateur caractérisé en ce que les moyens sensibles à la pression comprennent au moins deux clapets principaux pilotés montés en parallèle et soumis à la pression régnant dans la même chambre de pilotage.

Les essais ont montré que cette multiplication du nombre des clapets-membranes pilotés permet d'adopter des membranes suffisamment souples pour assurer le débit requis même aux pressions les plus faibles, sans pour autant risquer des déformations permanentes ou des phénomènes de fatigue lors du fonctionnement aux pressions élevées, ce qui n'était nullement évident a priori.

Dans un mode avantageux de réalisation de l'invention, les moyens d'étranglement sont prévus de façon à offrir à l'écoulement entre la zone à pression de référence, généralement constituée par la pression d'alimentation, au moins lors de certaines phase de fonctionnement et la chambre de pilotage une section de passage variable. Pour cela, les moyens d'étranglement peuvent être constitués d'un gicleur primaire et d'un gicleur secondaire placés en parallèle, l'écoulement à travers le gicleur secondaire étant coupé, par exemple par un clapet commandé par la pression d'alimentation, lorsque cette pression d'alimentation dépasse une valeur déterminée. Grâce à cette disposition, on évite l'engorgement de la chambre de pilotage et la dégradation des performances du régulateur et donc du confort respiratoire du porteur du masque aux pressions d'alimentation élevées.

Certains régulateurs, notamment ceux à usage militaire, comportent un voyant, dit "blinker", qui clignote au rythme des pulsations de pression du mélange respiratoire qui sorte du régulateur vers le masque. Souvent les variations de pression sont prélevées au niveau d'un injecteur de dilution du gaz respiratoire fourni par la source (oxygène pur en général) par de l'air prélevé dans l'atmosphère qui entoure le régulateur. Lorsque l'installation comprend un générateur en circuit ouvert, la dilution est souvent réalisée dans ce générateur lui-même de sorte qu'il n'est plus nécessaire de prévoir un injecteur. Et les variations normales de pression au niveau de la sortie peuvent être trop faibles pour provoquer à coup sûr les clignotements d'un voyant. Un régulateur suivant l'invention comporte avantageusement un circuit de détection ayant un organe sensible à la différence des pressions qui s'exercent sur ses deux faces, tel qu'une membrane, dont une face est reliée à une chambre de demande délimitée par une membrane de commande du clapet de pilotage et dont l'autre face est reliée au trajet de gaz respiratoire en un point séparé de la sortie de liaison par un clapet taré.

Grâce à cette disposition, une dépression apparaît sur une des faces et une légère surpression sur l'autre face lorsque le régulateur débite, ce qui permet d'actionner les moyens de détection de débit à coup sûr.

L'invention sera mieux comprise à la lecture de la description qui suit de modes particuliers d'exécution, donnés à titre d'exemples non limitatif. La description se réfère aux dessins qui l'accompagnent dans lesquels :

— la figure 1 est un schéma de principe montrant la constitution des divers circuits d'un régulateur suivant l'invention ;

— la figure 2 est un schéma montrant une autre disposition possible des clapets principaux d'un régulateur ayant une constitution générale similaire à celle de la figure 1 et une chambre de pilotage dont le volume change automatiquement en fonction de la pression d'alimentation ;

— la figure 3 est une vue de détail montrant une variante du clapet pneumatique de la figure 1 ;

— la figure 4 est un schéma montrant une constitution possible de moyens d'étranglement, utilisable en remplacement de celle montrée en figure 1.

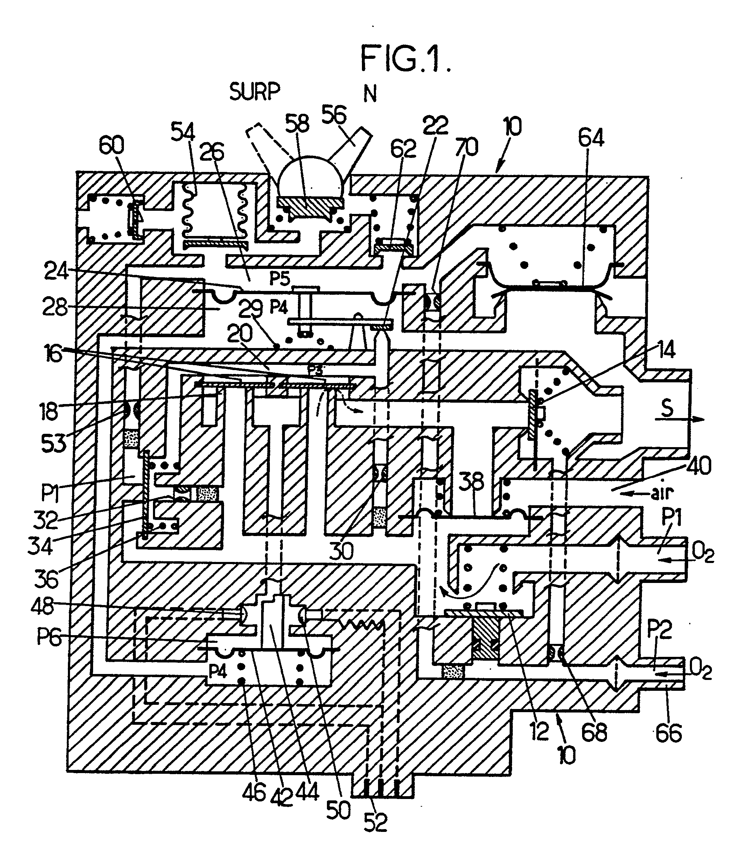

Le régulateur 10 montré en figure 1 peut être monté sur un siège éjectable portant également une bouteille d'oxygène sous pression de secours ; il est prévu pour être alimenté, en régime normal, par un générateur d'air enrichi en oxygène fonctionnant en circuit ouvert. Les générateurs existants de ce type comportent un système d'adsorption et de restitution délivrant de l'oxygène presque pur. Ils sont souvent complétés par un système de dilution fournissant un gaz respiratoire dont la teneur en oxygène est réglé en fonction de l'altitude, sous une pression qui varie dans de larges limites, souvent entre 0,2 bars et 4 bars de pression relative, suivant les conditions de vol.

Le régulateur représenté sur la figure 1 est destiné à fonctionner jusqu'à des altitudes élevées et comporte en conséquence plusieurs circuits, dont certains pourront être omis pour des régulateurs basse altitude n'exigeant pas d'alimentation du masque en surpression. La constitution générale du régulateur est classique et ceux des composants qui ne sont pas concernés par l'invention ne seront que sommairement décrits.

Le régulateur peut être regardé comme comportant un circuit d'alimentation normale, un circuit de détection de débit, un circuit de surpression et un circuit de secours qui seront successivement décrits.

Le circuit d'alimentation normale va d'une entrée d'alimentation en gaz respiratoire à pression P1 à une sortie S prévue pour être reliée à la chenille d'un masque respiratoire (non représenté) muni d'une soupape d'expiration. Ce circuit comporte successivement un robinet automatique 12 de fermeture du circuit, à commande pneumatique, normalement ouvert par un ressort et dont le rôle apparaîtra plus tard ; des moyens sensibles à la pression pour mettre en communication l'entrée et la sortie ; et un clapet taré 14. Alors que dans un régulateur classique les moyens sensibles à la pression comportent un clapet principal unique, le régulateur suivant l'invention montré en figure 1 comporte deux clapets 16 montés en parallèle et constitués chacun d'une membrane dont l'élasticité tend à l'appliquer sur un siège 18 délimitant l'arrivée de gaz respiratoire. En général, ces deux membranes seront identiques.

La face des membranes des clapets 16 opposée à celle qui s'appui sur les sièges 18 est soumise à la pression qui règne dans une chambre de pilotage 20 reliée :

— en permanence, par des moyens d'étranglement, à l'entrée d'alimentation en gaz respiratoire, à pression P1 ;

— par un clapet pilote 22, directement à la sortie S.

Le montage du clapet pilote 22 est classique : il est relié par une tringlerie à une membrane de demande 24 soumise sur une face à la pression qui règne dans une chambre de surpression 26 et qui tend à ouvrir le clapet et sur l'autre face à la pression P4 qui règne dans une chambre de demande 28 reliée à la sortie. Un ressort 29 maintient le clapet fermé au repos.

Alors que dans un régulateur classique les moyens d'étranglement placés entre l'entrée de gaz et la chambre de pilotage ont une section constante, les moyens montrés en figure 1 permettent de donner à la section de fuite de gaz une valeur différente suivant la pression d'alimentation P1. Pour cela, dans le mode de réalisation montré en figure 1, ces moyens d'étranglement comprennent un gicleur principal 30 alimenté en gaz respiratoire en permanence et un gicleur secondaire 32 dont la communication avec l'alimentation peut être coupée par un clapet 34 soumis à l'action antagoniste d'un ressort 36 qui tend à l'ouvrir et de la pression d'alimentation P1 qui tend à le fermer. Lorsque la pression d'alimentation dépasse une valeur déterminée, par exemple 1 bar, le clapet 34 se ferme pour éviter l'engorgement de la chambre de pilotage 20.

La pression qui règne dans la chambre de surpression 26 est égale à la pression ambiante lors du fonctionnement normal. On verra plus loin que cette pression peut être augmentée pour fournir à la sortie S un mélange respiratoire en surpression.

Le circuit normal d'alimentation est complété par un clapet antisuffocatoire 38 muni d'un ressort taré d'ouverture. Ce clapet ouvre une liaison directe d'une entrée d'air 40 (depuis l'atmosphère ambiante) vers la sortie S si la pression P1 s'annule.

## Circuit de détection

Le circuit de détection de débit comporte un organe sensible à la différence des pressions qui s'exercent sur ses faces opposées, constitué dans le mode de réalisation de la figure 1 par une membrane 42 solidaire d'un plongeur 44. Un ressort de réglage de seuil 46, qui peut être prévu pour être ajustable, exerce sur la membrane 42 une forme qui tend à amener le plongeur 44 dans la position où il est représenté en figure 1 et où il coupe le trajet lumineux entre un émetteur optique 48 et un récepteur 50, reliés à un connecteur 52 de liaison avec l'amplificateur d'un organe d'affichage.

La membrane 42 sépare deux chambres dont l'une est reliée à la chambre de demande 28 de façon à être soumise à la dépression P4 qui y règne lors de l'inspiration (environ -2 mbars en général). La chambre délimitée par l'autre face de la membrane 42 est reliée au trajet de gaz respiratoire, en un point situé entre les clapets principaux pilotés 16 et le clapet taré 14. Ce dernier est prévu pour créer en amont de la sortie S, une surpression d'inspiration P6 qui est faible (3 mbars par exemple) mais qui, du fait de sa coopération avec la dépression agissant sur l'autre face, est suffisante pour déplacer à coup sûr la membrane 42 lors de l'inspiration et amener le plongeur 44 dans une position où il libère le trajet lumineux.

## Circuit de surpression

Le régulateur montré en figure 1 permet de fournir à la sortie S un mélange respiratoire en surpression, soit sur commande de l'utilisateur, soit lorsque la pression ambiante tombe au dessous d'une valeur déterminée.

Pour cela, la chambre de surpression 26 n'est pas reliée directement à l'atmosphère. Elle est alimentée en gaz respiratoire sous pression par un gicleur calibré 53 et sur le trajet de liaison avec l'atmosphère sont interposés, successivement :

— un clapet de surpression sur lequel une capsule altimétrique 54 exerce une force de fermeture qui augmente lorsque la pression ambiante diminue ; cette capsule laisse le clapet ouvert aussi longtemps que la pression ambiante reste supérieure à une valeur prédéterminée,
— un sélecteur "normal-surpression" comportant une manette 56 à deux positions. Dans la position "normal" montrée en figure 1, la manette ouvre un clapet 58, de sorte que la surpression éventuelle est alors réglée uniquement par la capsule altimétrique 54. Lorsque la manette est dans la position "surpression" montrée en tirets, le clapet est fermé de façon complète et la pression dans la chambre 26 est alors déterminée soit par une soupape tarée de surpression 60 (lorsque la capsule altimétrique n'intervient pas), soit par cette capsule 54.

Le circuit de surpression est complété par une soupape de sécurité 62 placée sur la chambre de surpression 26 et une soupape de sécurité compensée 64 reliant la sortie S à l'atmosphère.

## Circuit de secours

Le régulateur montré en figure 1 est muni d'une entrée 66 destinée à être reliée à une source d'alimentation de secours (bouteille d'oxygène sous pression par exemple). La pression P2 appliquée à l'entrée 66, lorsque la bouteille est ouverte, est très supérieure à la pression P1. Cette pression P2 est généralement d'environ 9 bars. Le circuit de secours comporte une première branche débouchant directement à la sortie S pour alimenter le masque et munie d'un gicleur calibré 68 de limitation de débit. Une seconde branche du circuit, munie d'un gicleur 70 de surpression de secours, communique avec la chambre de surpression 26. Enfin, la pression P2 agit, lorsque la bouteille est en service, sur le robinet pneumatique 12 qu'elle ferme pour interrompre la communication entre l'entrée d'alimentation normale et le circuit respiratoire.

Le fonctionnement du régulateur est le suivant.

En fonctionnement normal, sans surpression, la pression P5 qui règne dans la chambre de surpression 26 est égale à la pression ambiante, le sélecteur de surpression étant dans la position "normal" et le clapet 58 étant ouvert.

Le régulateur est alimenté à la pression P1. Le gaz respiratoire franchit le robinet pneumatique 12 maintenu ouvert par son ressort et est distribué :

— à la chambre de pilotage 20, par le gicleur primaire 30 ouvert en permanence et, si la pression P1 est inférieure à un seuil déterminé, par le gicleur secondaire 32 (le clapet 34 étant ouvert);
— aux clapets principaux pilotés 16 ;
— au clapet antisuffocatoire 38 que la pression P1 maintient fermé.

En dehors des périodes d'inspiration de l'utilisateur du masque, le ressort 29 ferme le clapet pilote 22. La pression P3 dans la chambre de pilotage 20 monte jusqu'à la valeur P1 est maintient fermés les clapets principaux 16 : acun débit n'est fourni à la sortie S. Lorsque l'utilisateur inspire, il fait apparaître une dépression P4 dans la chambre de demande 28. La membrane de demande 24 se déplace et ouvre le clapet 22. Ce dernier vidange partiellement la chambre de pilotage 20. La diminution de la pression dans la chambre de pilotage 20 ouvre les clapets principaux 16 et laisse passer un débit de gaz respiratoire vers le masque.

Au cours de l'inspiration, le clapet taré 14 crée en amont une légère surpression P6 qui se transmet à la membrane 42 du détecteur de débit. La dépression P4 dans la chambre de demande 28 se transmet également à la membrane 42 qui se déplace en entraînant le plongeur 44. Le trajet lumineux du détecteur est libéré. Un signal est transmis par le connecteur 52 à l'amplificateur (non représenté) d'alimentation du voyant.

Dès que l'utilisateur cesse d'inspirer, la dépression dans la chambre de demande 28 disparaît. Le clapet pilote 22 se ferme. La pression augmente dans la chambre de pilotage 20 et se rapproche de la pression d'alimentation P1. Les clapets principaux 16 s'appliquent sur leur siège et arrêtent l'écoulement vers la sortie S. La pression P6 revient à sa valeur initiale. Le détecteur de débit cesse de fournir un signal. Le fonctionnement du régulateur est ainsi révélé par des battements du voyant ou "blinker".

Suivant que la pression d'alimentation est inférieure ou supérieure à 1 bar, le clapet 34 est ouvert ou fermé, dans le second cas il évite l'engorgement de la chambre de pilotage par suite d'un débit trop important. Cet engorgement diminuerait la vitesse de vidange de la chambre de pilotage, et dégraderait la réponse du régulateur aux cycles alternatifs.

Lorsque la manette 56 est mise sur la position "surpression" le clapet 58 est fermé. Le débit calibré fourni par le gicleur 53 ne peut s'échapper à l'air libre autrement que par la soupape de surpression 60. La pression P5 dans la chambre de surpression 26 et la pression au dessus de la soupape de sécurité compensée 64 augmentent. La pression augmente en conséquence dans l'ensemble du circuit respiratoire, jusqu'à une valeur fixée par le tarage de la soupape 60. On choisira fréquemment une valeur de surpression d'environ 5 mbars.

La mise en surpression au delà d'une altitude déterminée est commandée par un circuit alimenté par le même gicleur 53 que celui qui sert à la surpression manuelle. Lorsque la manette 56 est dans la position "normal" et que la capsule altimétrique 54 tend à obturer le passage de mise à l'air libre, la pression P5 au dessus de la membrane de demande augmente jusqu'à la valeur pour laquelle elle compense l'effort exercé par la capsule altimétrique. Il y a encore montée en pression de l'ensemble du circuit respiratoire, jusqu'à une valeur fonction de la pression ambiante.

Lorsqu'on fait appel à la source d'oxygène de secours, la pression P2 qui apparaît à l'entrée 66 ferme le robinet 12 et isole le générateur normal. Le clapet 38 s'ouvre sous l'action de son ressort, n'étant plus maintenu par la pression P1. L'oxygène à pression P2 est distribué au gicleur de secours 68 et au gicleur de surpression de secours 70. L'utilisateur respire l'oxygène fourni par le gicleur 68. Ses besoins ventilatoires sont complétés par de l'air ambiant puisé à travers les clapets 38 et 14.

La capsule altimétrique 54 établit une surpression P5 au dessus de la membrane de demande en fonction de l'altitude.

Pendant l'expiration la soupape du masque n'est pas bloquée par le débit continu. En effet, la soupape compensée 64 permet au débit continu de s'évacuer vers l'atmosphère en maintenant dans le circuit une pression fonction de l'altitude.

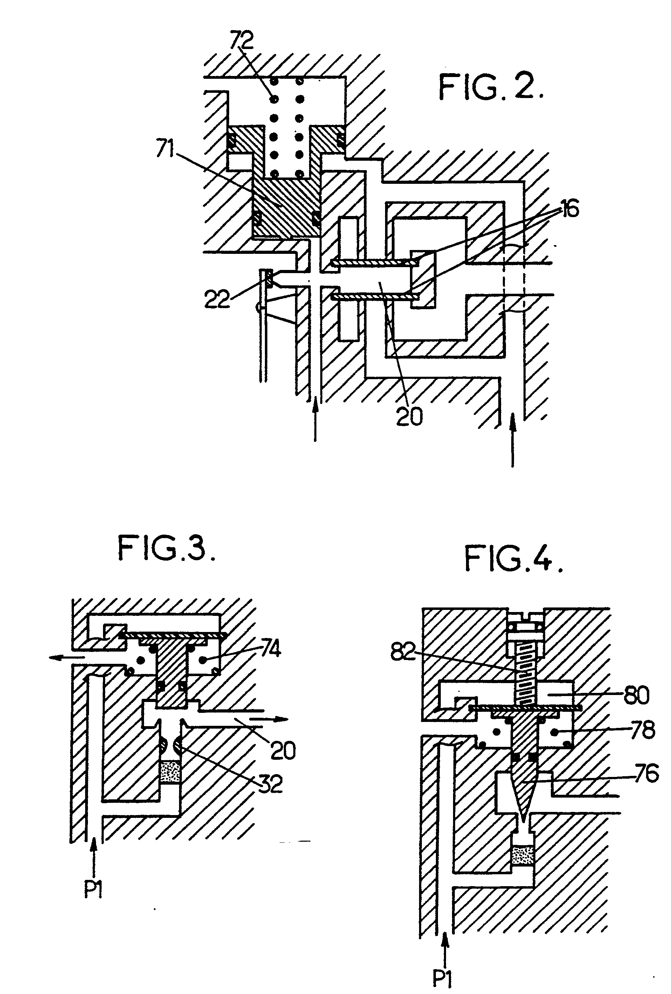

L'invention est susceptible de nombreuses variantes de réalisation. Dans le cas illustré en figure 2, où les éléments correspondants à ceux déjà décrits portent le même numéro de référence, les clapets membranes 16 sont placés en tandem de part et d'autre de la chambre de pilotage 20 au lieu d'être montés en parallèle comme dans le cas de la figure 1. Cette solution permet de réduire le volume du circuit de pilotage et de réduire les délais de réponse aux basses pressions d'alimentation.

De plus, la chambre de pilotage présente un volume variable en fonction de la pression d'alimentation. Ce résultat est atteint, dans le mode de réalisation montré en figure 2, en prolongeant la chambre de pilotage 20 par un cylindre dans lequel coulisse un piston 71 soumis aux actions antagonistes d'un ressort de progressivité 72 et de la pression dans la chambre de pilotage. On peut ainsi obtenir une ouverture plus progressive des clapets principaux 16 aux pressions d'alimentation élevées, du fait qu'on ralentit la chute de pression dans la chambre de pilotage lors de l'ouverture du clapet pilote 22. Dans la pratique, on sera souvent amené à faire varier ainsi de 30 % environ le volume de la chambre entre la pression minimale et la pression maximale d'alimentation par le générateur.

Dans le mode de réalisation montré en figure 3, la variation de la section de passage offerte au gaz provenant de l'alimentation vers la chambre de pilotage est assurée par un clapet différent de celui de la figure 1, comportant un passage obturable prévu en aval du gicleur secondaire 32, sous forme d'un plongeur soumis à l'effort antagoniste d'un ressort 74 et de la pression P1, étranglant la section de fuite en aval du gicleur secondaire 32 lors de l'augmentation de la pression d'alimentation.

Dans le mode de réalisation de la figure 4, la variation est progressive, alors qu'elle est par échelon dans le cas montré en figure 1. La progressivité est assurée en substituant, au gicleur 32 obturable, un pointeau 76 soumis à l'action antagoniste d'un ressort 78 qui tend à amener le pointeau dans la position de butée où il est représenté en figure 4 et où il libère une section maximale de passage et la pression qui règne dans une chambre 80 à pression P1, qui tend à amener le pointeau en butée contre le bord du conduit d'écoulement de gaz. La section maximale de passage peut être réglée à l'aide d'une vis 82 et la loi de variation de pression est déterminée par le retour du ressort 78.

D'autres modes encore de mise en oeuvre de l'invention sont possibles et il doit être entendu que la portée du présent brevet s'étend à toutes variantes des dispositions ci-dessus restant dans le cadre des équivalences.

## Revendications

1. Régulateur à la demande pour installation respiratoire comportant une entrée d'alimentation en gaz respiratoire et une sortie (S) de liaison avec un masque respiratoire, dont la mise en communication est commandée par des moyens (16) sensibles à la pression qui règne dans une chambre de pilotage (20) reliée à une pression de référence par des moyens d'étranglement et à la sortie de liaison (S) par un clapet de pilotage (22) commandé par la pression qui règne à ladite sortie de liaison, caractérisé en ce que les moyens sensibles à la pression comprennent au moins deux clapets principaux (16) pilotés de mise en communication de l'entrée et de la sortie montés en parallèle et dont l'élément mobile est soumis à la pression régnant dans la chambre de pilotage (20).

2. Régulateur selon la revendication 1, caractérisé en ce que les moyens d'étranglement (30, 32, 76) sont prévus de façon à offrir à l'écoulement entre la zone à pression de référence et la chambre de pilotage une section de passage variable.

3. Régulateur selon la revendication 2, caractérisé en ce que les moyens d'étranglement sont constitués d'un gicleur primaire (30) et d'un gicleur secondaire (32) placés en parallèle, l'écoulement à travers le gicleur secondaire étant coupé, par un clapet (34) commandé par la pression d'alimentation, lorsque cette pression d'alimentation dépasse une valeur déterminée.

4. Régulateur selon la revendication 2, caractérisé en ce que les moyens d'étranglement sont constitués par un pointeau (76) coopérant avec un passage soumis à l'action antagoniste d'un ressort de rappel (78) qui tend à l'amener dans une position de pleine ouverture du passage et de la pression d'alimentation qui tend à l'amener dans une position de fermeture du passage.

5. Régulateur selon l'une quelconque des revendications précédentes caractérisé en ce que les clapets principaux pilotés sont disposés côte à côte ou sont disposés face à face et séparés par la chambre de pilotage (20).

6. Régulateur selon l'une quelconque des revendications précédentes, caractérisé en ce qu'il comporte un organe sensible à la différence des pressions qui s'exercent sur ses deux faces, tel qu'une membrane (42) dont une face est soumise à la pression provenant de la chambre de demande délimitée par une membrane de commande du clapet de pilotage et dont l'autre face est reliée au trajet de gaz respiratoire en un point séparé de la sortie de liaison par un clapet taré (14).

7. Régulateur selon l'une quelconque des revendications précédentes, caractérisé en ce qu'il comporte des moyens pour augmenter le volume de la chambre de pilotage lorsque la pression augmente.

## Patentansprüche

1. Bedarfsabhängiger Regler für ein Atemgerät mit einem Eingang zur Zufuhr von Atemgas und einem Ausgang (S) zum Anschluß einer Atemmaske, deren Verbindung durch Mittel (16) gesteuert wird, die auf den in einer Steuerkammer (20) herrschenden Druck ansprechen, wobei diese Steuerkammer (20) über Drosselmittel mit einem Referenzdruck und über ein durch den an dem Ausgang herrschenden Druck gesteuertes Steuerventil (22) mit dem Ausgang verbunden ist, dadurch gekennzeichnet, daß die auf Druck ansprechenden Mittel wenigstens zwei gesteuerte Hauptventile (16) für die Verbindung des Eingangs und des Ausgangs umfassen, die parallel angeordnet sind und deren bewegliches Element dem in der Steuerkammer (20) herrschenden Druck ausgesetzt ist.

2. Regler nach Anspruch 1, dadurch gekennzeichnet, daß die Drosselmittel (30, 32, 76) so angeordnet sind, daß sie einen variablen Durchflußquerschnitt für die Strömung zwischen der Referenzdruckzone und der Steuerkammer bilden.

3. Regler nach Anspruch 2, dadurch gekennzeichnet, daß die Drosselmittel aus einer Primärdüse (30) und einer Sekundärdüse (32) bestehen, die parallel zueinander angeordnet sind und daß die Strömung durch die Sekundärdüse durch ein von dem Speisedruck gesteuertes Ventil unterbrochen wird, wenn dieser Speisedruck einen vorbestimmten Wert überschreitet.

4. Regler nach Anspruch 2, dadurch gekennzeichnet, daß die Drosselmittel aus einer mit einem Durchgang zusammenwirkenden Düsennadel (76) bestehen, die einerseits der Gegenwirkung einer Rückholfeder (78), von der sie in eine Position vorgespannt wird, in der sie den Durchgang vollständig freigibt, und andererseits dem Speisedruck ausgesetzt ist, der sie In eine Position vorspannt, in der sie den Durchgang sperrt.

5. Regler nach einem der vorhergehenden Ansprüche, dadurch gekennzeichnet, daß die gesteuerten Hauptventile seitlich nebeneinander oder einander gegenüberliegend angeordnet und durch die Steuerkammer (20) voneinander getrennt sind.

6. Regler nach einem der vorhergehenden Ansprüche, dadurch gekennzeichnet, daß ein Organ, beispielsweise eine Membran (42), vorgesehen ist, das auf die Differenz der auf seine beiden Seiten einwirkenden Drücke anspricht und dessen eine Seite dem von der von einer Steuermembran des Steuerventils begrenzten Anforderungskammer kommenden Druck ausgesetzt ist und deren andere Seite in einem Punkt, der von dem Verbindungsausgang durch ein tariertes Ventil (14) getrennt ist, mit dem Weg des Atemgases verbunden ist.

7. Regler nach einem der vorhergehenden Ansprüche, dadurch gekennzeichnet, daß Mittel vorgesehen sind, um das Volumen der Steuerkammer zu vergrößern, wenn der Druck ansteigt.

## Claims

1. Demand regulator for breathing apparatus comprising a breathing gas supply inlet and an outlet (S) for connection to a breathing mask, whose communication is controlled by means (16) sensitive to the pressure which prevails in a pilot chamber (20) connected to a reference pressure by throttling means and to the connection outlet (S) by a pilot valve (22) controlled by the pressure which prevails at said connection outlet, characterized in that the means sensitive to tie pressure comprise at least two main piloted valves (16) for communication between the inlet and the outlet, mounted in parallel relation and whose movable element is subjected to the pressure which prevails in the pilot chamber (20).

2. Regulator according to claim 1, characterized in that the throttling means (30, 32, 76) are arranged to offer a variable cross-sectional flow area to the flow between said zone at a reference pressure and the pilot chamber.

3. Regulator according to claim 2, characterized in that the restriction means comprise a primary nozzle (30) and a secondary nozzle (32) located in parallel relation, the flow between the secondary nozzle being cut-off by a feed pressure controlled valve (34), when the feed pressure exceeds a predetermined value.

4. Regulator according to claim 2, characterized in that the throttling means consist of a needle (76) which cooperates with a passage and is subjected to the mutually opposed actions of a return spring which tends to bring it to a position of full opening of the passage and of the feed pressure which tends to bring to a position where it closes the passage.

5. Regulator according to any one of the preceding claims, characterized in that the piloted main valves are located side by side or in confronting relation and are separated by the pilot chamber (20).

6. Regulator according to any one of the preceding claims, characterized in that it comprises an element which is responsive to the pressure differential across its two faces, such as a diaphragm (42) having a face which is subjected to the pressure from the demand chamber, defined by a diaphragm for controlling the pilot valve and another face which is connected to the path of breathing gas at a point which is separated from the connection outlet by a loaded valve (14).

7. Regulator according to any one of the preceding claims, characterized in that it comprises means for increasing the volume of the pilot chamber when the pressure increases.

# FIG.1.

FIG. 2.

FIG. 3.

FIG. 4.